# FASCICULE DE BREVET EUROPEEN

(11) **EP 1 335 287 B1**
(45) Date de publication et mention de la délivrance du brevet: **14.11.2007**
(21) Numéro de dépôt: 03290229.8
(22) Date de dépôt: 29.01.2003
(51) Int. Cl.: G06F 9/46

(54) **Procédé de mise à jour automatique d'un chemin d'accès au disque système d'un périmètre matériel de ressources informatiques, système pour exécuter ce procédé et mémoire utilisée dans ce système**
Verfahren zur automatischen Aktualisierung des Pfadzugriffs zu einem Festplattensystem eines Hardwareperimeters von Rechnerressourcen, Anordnung zur Durchführung dieses Verfahrens und Speicher, der in diesem System verwendet wird
Process for automatically updating an access path to a system disk of a hardware perimeter of computing resources, system for implementing said process and memory used in said system

(30) Priorité: 07.02.2002 FR 0201520
(43) Date de publication de la demande: 13.08.2003
(73) Titulaire: BULL S.A., 78430 Louveciennes (FR)
(72) Inventeur: Bouchet, Alain, 95840 Villiers-Adam (FR)
(74) Mandataire: Pellegrini, Marie Claude

(56) Documents cités:
- US-A- 5 345 590
- US-A- 5 845 329
- US-A- 6 047 353
- US-B1- 6 260 120

## Description

L'invention concerne un procédé et un système de mise à jour automatique d'un chemin d'accès au disque système d'un périmètre matériel de ressources informatiques lors du lancement d'une activité d'exploitation sur ce périmètre.

Plus précisément, le procédé et le système concernent des systèmes configurables de ressources informatiques adaptés pour :
- configurer plusieurs périmètres destinés à être activés simultanément ou successivement, chaque périmètre comportant :

- une unité centrale de traitement, formée à partir d'une ou plusieurs cellules de calcul d'une plate-forme informatique multicellulaire,
- des ressources communes à l'ensemble de la plate-forme dont au moins un disque système raccordé à l'unité centrale de traitement par l'intermédiaire de moyens adressables d'interconnexion de la plate-forme au disque système, et
- une mémoire de travail contenant le chemin d'accès utilisé lors de l'activation du périmètre pour lancer un système d'exploitation contenu dans le disque système, ce chemin d'accès se composant d'une partie haute définissant les éléments matériels à parcourir pour atteindre les moyens d'interconnexion à partir de l'unité de traitement, cette partie haute étant uniquement fonction de l'unité de traitement utilisée dans ce périmètre, et d'une partie basse définissant les éléments matériels à parcourir pour atteindre le disque système à partir des moyens d'interconnexion, cette partie basse étant uniquement fonction de la position du disque système par rapport aux moyens d'interconnexion,
- définir une activité d'exploitation susceptible d'être lancée successivement sur plusieurs périmètres différents, l'activité regroupant des moyens logiciels à mettre en oeuvre pour réaliser cette activité, ces moyens logiciels comportant au moins un système d'exploitation apte à gérer les ressources matérielles du périmètre sur lequel l'activité doit être lancée.

A l'heure actuelle, un des axes d'évolution des matériels et/ou des systèmes informatiques concerne la mise en oeuvre d'une flexibilité maximale des ressources informatiques configurables, au bénéfice d'un utilisateur, disposant localement de ressources informatiques notablement plus réduites.

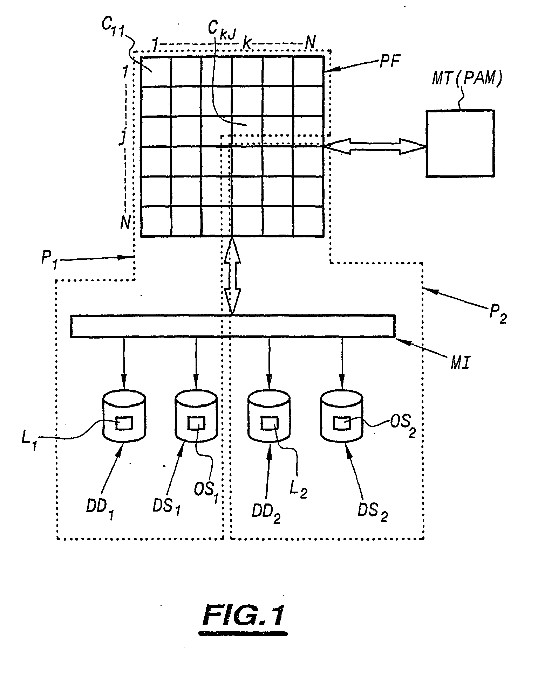

Dans les systèmes informatiques configurables ou reconfigurables actuels, ainsi que représentés dans la figure 1, on utilise une plate-forme multicellulaire PF de ressources informatiques. La plate-forme multicellulaire PF est formée de plusieurs cellules de calcul Cₖⱼ comportant au moins une unité centrale de traitement et des mémoires de travail locales dont une mémoire non volatile dite mémoire NVRAM. Les mémoires de travail de chaque cellule comportent notamment un programme d'amorçage ou programme BIOS (Basic Input/Output System) et un chemin d'accès à un disque système contenant un système d'exploitation apte à gérer une cellule ou un groupe de cellules de calcul. Au démarrage de la cellule ou du groupe de cellules, le chemin d'accès est utilisé par le programme BIOS pour connaître la localisation du disque système contenant le système d'exploitation à charger et à lancer. Classiquement, le chemin d'accès est enregistré dans la mémoire NVRAM.

Dans les systèmes configurables ou reconfigurables tels que représentés à la figure 1, il existe des ressources communes à l'ensemble des cellules de la plate-forme. Ces ressources communes comportent des mémoires de masse dont notamment des disques système et des disques de données. Les disques de données comportent par exemple des logiciels d'application ou applicatifs à exécuter et/ou des données à traiter. A titre d'exemple, sur la figure 1, les ressources communes comportent un disque de données DD₁ contenant un logiciel d'application L₁, un disque système DS₁ contenant un système d'exploitation OS₁, un disque de données DD₂ contenant un logiciel d'application L₂ et un disque système DS₂ contenant un système d'exploitation OS₂.

Pour assurer une flexibilité maximale de ces systèmes, les ressources communes sont raccordées à la plate-forme PF par des moyens adressables d'interconnexion MI conforme à une architecture SAN (Storage Area Network). Ces moyens d'interconnexion MI sont destinés à permettre l'accès aux ressources communes à partir de n'importe quelle cellule ou groupe de cellules configurés sur la plate-forme PF. Ainsi, un disque de données peut être accédé à partir d'une cellule Cₖⱼ dans une configuration donnée de la plate-forme PF, puis ultérieurement par une cellule Cₖⱼ₊₁ dans le cadre d'une configuration différente de la plate-forme. De tels moyens d'interconnexion MI sont donc aptes à permettre à l'ensemble des cellules de la plate-forme d'accéder aux ressources communes sans qu'il soit pour cela nécessaire d'effectuer une quelconque opération de recâblage.

Finalement, les systèmes informatiques configurables ou reconfigurables comportent également un outil d'administration MT permettant à un utilisateur de regrouper les ressources informatiques matérielles en des périmètres de ressources informatiques Pᵢ destinés à exécuter des activités d'exploitation Aᵢ. Dans le contexte des systèmes configurables ou reconfigurables, le terme "activité d'exploitation" désigne l'ensemble des moyens logiciels nécessaires pour mettre en oeuvre une fonction qu'un utilisateur du système veut réaliser. Des exemples de telles fonctions sont par exemple l'établissement de feuilles de paie ou la génération de listes de clients à contacter. Une activité comporte donc au moins un système d'exploitation apte à gérer les ressources informatiques matérielles de la plate-forme. La fonction souhaitée par l'utilisateur n'étant généralement pas remplie par le système d'exploitation à lui seul, une activité d'exploitation comporte communément en plus un ou plusieurs logiciels d'application destinés à être exécutés sur le système d'exploitation pour réaliser la ou les fonctions souhaitées par l'utilisateur. Ici, une activité A₁ comporte le logiciel L₁ et le système d'exploitation OS₁.

Chaque périmètre Pᵢ est formé par un groupe de cellules Cₖⱼ et d'une partie des ressources communes telles qu'un disque de données et au moins un disque système. Il est possible dans ces systèmes de définir plusieurs périmètres Pᵢ. Par exemple, sur la figure 1, deux périmètres P₁ et P₂ ont été configurés. Le périmètre P₁, délimité par une première ligne en pointillés, comporte un premier groupe de cellules, le disque de données DD₁ et le disque système DS₁. Le périmètre P₂, délimité par une seconde ligne en pointillés, comporte un second groupe de cellules, distinct du premier groupe de cellules, le disque de données DD₂ et le disque système DS₂.

Lorsque deux périmètres tels que les périmètres P₁ et P₂ de la figure 1 utilisent chacun des ressources matérielles distinctes de celle de l'autre périmètre, ils peuvent être exécutés simultanément sur la même plate-forme. Dans le cas contraire, ils doivent être exécutés successivement sur la plate-forme PF.

De tels systèmes correspondent à des systèmes ou machines désignées habituellement sous le terme de machines à partition. Ils permettent normalement d'installer et d'exécuter simultanément ou successivement des activités d'exploitation Aᵢ différentes dans différents périmètres de la plate-forme. Néanmoins, lorsqu'une telle installation est effectuée, il n'est généralement pas possible de transférer simplement une même activité d'exploitation exécutée dans un premier périmètre vers un périmètre différent sans réinstallation ou manipulation physique. En effet, le contexte d'exécution de l'activité d'exploitation, contenant par exemple les différentes variables d'environnement nécessaires au démarrage ou redémarrage de l'activité d'exploitation, est sauvegardé, au moins en partie, dans les mémoires de travail locales du périmètre. Ceci est le cas en particulier pour le chemin d'accès au disque système. Ainsi, un utilisateur dispose actuellement de deux solutions lorsqu'il souhaite relancer l'activité A₁ jusqu'à présent exécutée dans le périmètre P₁, dans le nouveau périmètre P₂. La première solution consiste à remplacer physiquement le disque système DS₂ du périmètre P₂ par le disque système DS₁ du périmètre P₁. A l'issue de cette manipulation physique, le chemin d'accès enregistré dans la mémoire NVRAM du périmètre P₂ correspond bien à un chemin d'accès au disque système DS₁.

La seconde solution consiste à effectuer une opération de réinstallation du disque système du périmètre P₂ pour remplacer le chemin d'accès actuellement enregistré dans la mémoire NVRAM locale du périmètre P₂ par un nouveau chemin d'accès correspondant au disque système DS₁. Toutefois, quelle que soit la solution retenue pour inclure le disque système de l'activité A₁ dans un nouveau périmètre, les opérations sont longues et fastidieuses.

L'arrière-plan technologique est décrit dans les documents suivants : US-B1-6 260 120, US-A-5 845 329, US-A-6 047 353 et US-A-5 345 590.

Plus précisément, US 6 260 120 décrit un système pour limiter le nombre de volumes logiques d'une unité de stockage d'informations auxquels peut accéder un système d'exploitation d'un calculateur.

US 5 845 329 décrit un ordinateur multiprocesseur équipé de mémoires accessibles en parallèle.

US 6 047 353 traite de la création d'un journal d'événements amélioré permettant de faciliter l'identification de problèmes de fonctionnements.

US 5 345 590 traite de la ré-allocation de mémoire entre différentes ressources informatiques crées sur une même machine.

L'invention vise à remédier à cet inconvénient en proposant un procédé plus simple pour inclure un nouveau disque système dans un périmètre informatique configuré sur une plate-forme multicellulaire.

Elle a donc pour objet un procédé conforme la revendication 1, de mise à jour automatique d'un chemin d'accès au disque système.

Selon le procédé décrit ci-dessus, quel que soit le périmètre utilisé pour installer un disque système, au moins la partie basse du chemin d'accès à ce nouveau disque système est enregistrée dans une mémoire associée à l'outil d'administration. Ainsi, l'information sur la position du disque système par rapport aux moyens d'interconnexion, déterminée lors de la première installation de ce nouveau disque système dans un périmètre, n'est pas réservée au périmètre utilisé pour installer ce nouveau disque système mais, au contraire, enregistrée dans une mémoire en vue d'être réutilisée. C'est ce qui est fait lors de la définition d'une nouvelle activité dans le procédé décrit ci-dessus.

Lors de cette définition d'une nouvelle activité, la nouvelle activité est associée à la partie basse du disque système contenue dans la mémoire. La partie basse associée à la nouvelle activité correspond au disque système contenant le système d'exploitation destiné à être mis en oeuvre pour réaliser cette activité.

Ensuite, lors du lancement de cette nouvelle activité sur un nouveau périmètre, le chemin d'accès au disque système de ce nouveau périmètre est automatiquement mis à jour. En effet, la partie haute du chemin d'accès du nouveau périmètre est connue puisque celle-ci est constante. Cette partie haute est constante, car dans un système configurable tel que décrit ci-dessus, les disques système sont raccordés aux unités de traitement correspondantes par l'intermédiaire de moyens d'interconnexion adressables. Aucune opération de recâblage pour raccorder une unité de traitement aux moyens d'interconnexion n'est donc nécessaire et la partie haute de chaque périmètre est donc constante.

Pour reconstruire un chemin d'accès au disque système contenant le système d'exploitation à lancer lors de l'exécution de cette nouvelle activité, seule la partie basse du chemin d'accès actuellement enregistré dans la mémoire de travail du nouveau périmètre doit être mise à jour. Pour cela, cette partie basse est remplacée par celle associée avec l'activité qui va être lancée sur ce nouveau périmètre. Ainsi, le chemin d'accès du nouveau périmètre est automatiquement mis à jour sans qu'aucune opération de recâblage ou de réinstallation d'un disque système ne soit nécessaire lors du transfert d'une activité d'un périmètre vers un autre périmètre.

D'autres caractéristiques d'un procédé de mise à jour automatique d'un chemin d'accès au disque apparaissent dans les revendications dépendantes.

L'invention a également pour objet un système configurable de ressources informatiques conforme à la revendication 7.

D'autres caractéristiques d'un système de mise à jour automatique d'un chemin d'accès au disque système apparaissent dans les revendications dépendantes.

L'invention a également pour objet une mémoire destinée à être utilisée dans un système configurable conforme à l'invention, caractérisée en ce qu'elle comporte un fichier d'identité associant un identificateur d'une activité d'exploitation et un identificateur de la partie basse d'un chemin d'accès correspondant au disque système comportant le système d'exploitation lancé lors de l'exécution de cette activité.

L'invention sera mieux comprise à la lecture de la description qui va suivre, donnée uniquement à titre d'exemple et faite en se référant aux dessins, sur lesquels :
- la figure 1 est une illustration schématique d'une plate-forme multicellulaire connue,
- la figure 2 est une illustration schématique de l'architecture matérielle d'un système conforme à l'invention, et
- la figure 3 est un organigramme d'un procédé de configuration de périmètres de ressources informatiques conforme à l'invention.

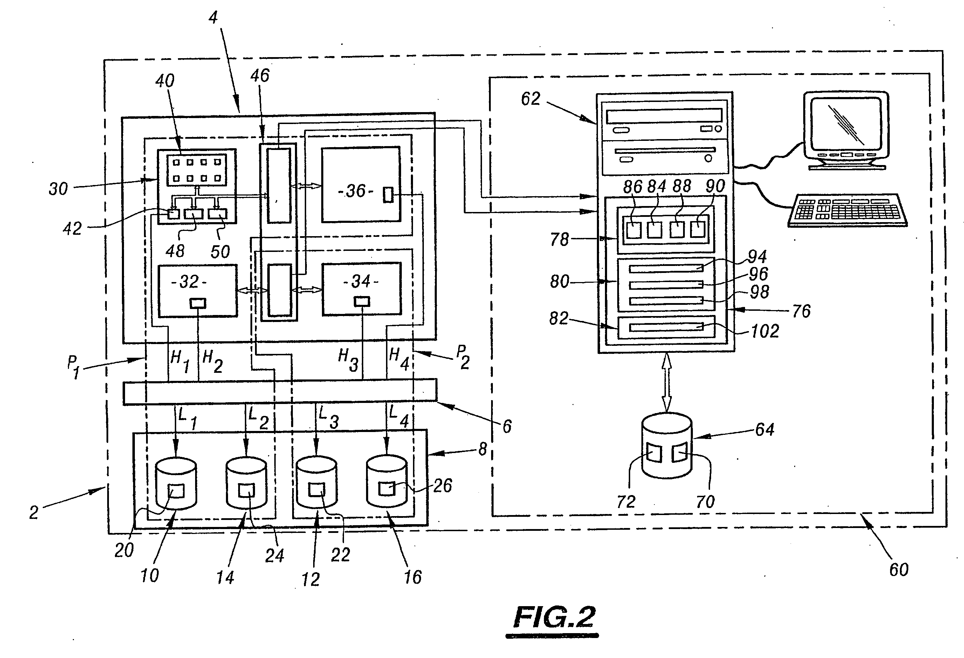

La figure 2 représente un système 2 configurable de ressources informatiques comportant une plate-forme multicellulaire 4 raccordée par l'intermédiaire de moyens 6 d'interconnexion à des ressources informatiques communes 8.

Ici, à titre d'exemple, les ressources informatiques communes comportent uniquement des mémoires de masse. Ces mémoires de masse se composent ici de deux disques de données 10 et 12 et de deux disques système 14 et 16. Les disques de données 10 et 12 sont destinés à contenir des logiciels d'application et/ou des données à traiter. Ici, le disque de données 10 contient un logiciel d'application 20 et le disque de données 12 contient un logiciel d'application 22. Ces logiciels 20, 22 sont par exemple des logiciels de gestion de bases de données, des logiciels connus sous le terme de ERP (Entreprise Resource Planning), ou des logiciels d'administration des ressources informatiques.

Ici, les disques système 14 et 16 comportent respectivement un système d'exploitation 24 et un système d'exploitation 26. Ces systèmes d'exploitation 24 et 26 sont aptes à gérer les ressources informatiques et matérielles de la plate-forme 4. Ainsi, ces systèmes d'exploitation offrent des fonctionnalités d'installation d'un nouveau disque système. Ces systèmes d'exploitation sont par exemple des systèmes d'exploitation classiques tels que UNIX, LINUX ou WINDOWS NT.

Chacun des disques des ressources communes 8 est raccordé, par une liaison qui lui est propre, aux moyens d'interconnexion 6. Les chemins d'accès, à partir des moyens d'interconnexion 6 jusqu'aux disques 10, 12, 14 et 16, sont respectivement notés L₁, L₃, L₂, et L₄. Ces chemins d'accès correspondent par exemple à l'adresse du port d'entrée/sortie des moyens d'interconnexion 6 auquel le disque est raccordé. Dans la suite de la description, chaque chemin d'accès, à partir des moyens d'interconnexion 6 jusqu'à un disque système, seront appelés parties basses d'un chemin d'accès à un disque système. Ainsi, dans l'exemple décrit ici, le système 2 comporte deux parties basses de chemins d'accès : L₂ et L₄.

La plate-forme multicellulaire 4 est divisée en plusieurs cellules de calcul. Ici, la plate-forme 4 comporte quatre cellules de calcul 30, 32, 34 et 36 identiques. Ainsi, seule la cellule 30 sera décrite en détail.

La cellule 30 est propre à exécuter, de façon autonome ou en coopération avec d'autres cellules, les activités d'exploitation enregistrées dans les ressources communes. Pour cela, cette cellule ou ce groupe de cellules est géré par l'un des systèmes d'exploitation enregistré dans les ressources communes.

La cellule 30 comporte une unité centrale de traitement 40 raccordée par l'intermédiaire de bus de données et d'adresses à une carte d'entrée/sortie 42 et à des mémoires de travail locales. Le bus de données et d'adresses est également raccordé à un ensemble 46 de cartes d'interface avec un outil d'administration de la plate-forme 4.

L'unité centrale de traitement 40 est destinée à exécuter des opérations de calcul. Elle comporte à cet effet, dans le mode de réalisation décrit ici, huit microcontrôleurs de 64 bits aptes à exécuter, en parallèle et simultanément, ces opérations de calcul.

La carte d'entrée/sortie 42 est destinée à assurer les échanges d'informations entre les ressources communes et la cellule 30. Pour cela, elle est raccordée, par une liaison d'échange d'informations, aux moyens d'interconnexion 6.

Ici, deux mémoires de travail locales 48 et 50 sont représentées. La mémoire 48 est une mémoire non volatile NVRAM destinée à contenir le chemin d'accès au disque système qui doit être lancé sur la cellule 30. Ce chemin d'accès indique donc quelle est la succession de segments matériels à parcourir pour atteindre le disque système. Dans une architecture telle que celle du système 2, ce chemin d'accès se compose de deux parties : une partie haute et la partie basse décrite précédemment en regard des ressources communes 8. La partie haute décrit les segments matériels à parcourir dans la cellule 30 pour atteindre la carte d'entrée/sortie raccordée aux moyens d'interconnexion 6, c'est-à-dire, pour la cellule 30, par exemple l'adresse de la carte 42. Ainsi, tant qu'aucune opération de recâblage d'une cellule aux moyens d'interconnexion 6 n'est réalisée, la partie haute est constante pour chaque cellule. En effet, la succession de segments matériels, pour atteindre la carte d'entrée/sortie raccordée aux moyens d'interconnexion 6, n'est pas modifiée pour une cellule donnée, quel que soit le disque système utilisé par cette cellule.

La partie basse correspond, quant à elle, à un disque système donné. Elle est indépendante de la cellule ou du groupe de cellules utilisant ce disque système. En effet, dans la mesure où les disques système ne sont pas physiquement déplacés ou recâblés, les chemins d'accès des moyens d'interconnexion 6 aux disques système demeurent inchangés.

Dans la suite de la description, la partie haute des chemins d'accès des cellules 30, 32, 34 et 36 sera respectivement notée H₁, H₂, H₃ et H₄.

La mémoire 50 comporte le programme d'amorçage ou programme BIOS (Basic Input Ouput System). Ce programme BIOS réalise les fonctions élémentaires d'interface entre les ressources matérielles de la cellule 30 et un système d'exploitation exécuté sur cette cellule. Ce programme BIOS est apte, en outre, à lancer le système d'exploitation correspondant au chemin d'accès enregistré dans la mémoire 48. Il est également apte, sous la commande du système d'exploitation lancé, à modifier et/ou à enregistrer un nouveau chemin d'accès dans la mémoire 48.

Dans le système 2 décrit ici, ce programme BIOS est également adapté pour que, lorsqu'une commande de modification ou d'enregistrement d'un nouveau chemin d'accès dans la mémoire 48 est transmise par le système d'exploitation, le nouveau chemin d'accès soit également transmis à l'ensemble 46 de cartes d'interface.

Finalement, chaque cellule comporte, enregistré dans l'une de ses mémoires de travail locales, un numéro d'ordre permettant de la distinguer des autres cellules de la plate-forme 4.

Les moyens d'interconnexion 6 sont aptes à raccorder l'une quelconque des cellules de la plate-forme 4 à l'un quelconque des disques 10, 12, 14 et 16. Ainsi, grâce aux moyens d'interconnexion 6, aucune opération de recâblage n'est nécessaire pour raccorder l'un quelconque des disques à l'une quelconque des cellules de la plate-forme 4. Ces moyens d'interconnexion sont, ici, un réseau dédié au stockage d'informations, par exemple, conforme à une architecture SAN (Storage Area Network). Il est réalisé ici à partir de produits connus sous les termes de "Switchs Fiber Channel" et commercialisés, par exemple, par la société Brocade Communications Systems, Inc., 1745 Technology Drive, San Jose, CA 95110, U.S.A. et portant les références SW 3800 ou SW 2040 chez ce fournisseur.

Le système 2 comporte également un outil d'administration 60 raccordé par l'intermédiaire de l'ensemble 46 de cartes d'interface aux cellules de la plate-forme 4. Cet outil d'administration 60 est apte à gérer la configuration de la plate-forme 4. Les cartes d'interface sont ici des interfaces d'échanges d'informations entre l'outil d'administration 60 et les différentes cellules de la plate-forme 4.

L'outil d'administration 60 est par exemple réalisé à partir d'un calculateur 62 distinct de la plate-forme 4, équipé d'un écran, d'un clavier et associé à une mémoire 64.

La mémoire 64 contient deux listes de données 70 et 72. La liste 70 contient la partie basse du chemin d'accès à chaque disque système associé à la plate-forme 4. Ici, cette liste 70 contient donc les parties basses L₂ et L₄.

La liste 72 contient la définition de plusieurs domaines logiques susceptibles d'être exécutés sur la plate-forme 4. Un domaine logique regroupe d'une part un fichier d'identité et, d'autre part, un fichier de définition d'un périmètre matériel de ressources informatiques. Le fichier d'identité comporte un identificateur d'une activité d'exploitation et des identificateurs des ressources logicielles à mettre en oeuvre pour exécuter cette activité. Les identificateurs des ressources logicielles contiennent ici au moins un identificateur d'un système d'exploitation et, éventuellement, un ou plusieurs identificateurs de logiciels d'application à lancer. De plus, le fichier d'identité comporte des attributs de sauvegarde du contexte d'exécution de l'activité. En particulier, ces attributs de sauvegarde sont destinés à contenir l'ensemble des paramètres de configuration nécessaires à l'exécution du système d'exploitation de l'activité de manière à ce que ce système d'exploitation puisse être exécuté avec les mêmes paramètres de configuration sur n'importe quel périmètre. L'indépendance du système d'exploitation vis-à-vis du périmètre de ressources matérielles sur lequel il est ou sera exécuté est ainsi obtenue. Parmi ces attributs de sauvegarde, l'un d'eux est la partie basse du chemin d'accès au disque système contenant le système d'exploitation sur lequel doit être exécuté le ou les logiciels d'application correspondant à l'identificateur de l'activité d'exploitation à exécuter.

Le fichier de définition d'un périmètre contient la définition des ressources informatiques matérielles destinées à être mises en oeuvre pour exécuter l'activité d'exploitation correspondant à l'identificateur d'activité enregistré dans le fichier d'identité de ce domaine. La définition d'un périmètre comporte une ou plusieurs références à des cellules de la plate-forme 4, au moins une référence à un disque système et une ou plusieurs références à des disques de données. A titre d'exemple, la liste 72 comporte ici deux domaines notés D₁ et D₂. Le domaine D₁ comprend la définition d'un périmètre P₁, et un fichier d'identité Id₁. Le périmètre P₁ défini dans cet exemple comprend les cellules 30, 32 et 36 de la plate-forme 4, ainsi que le disque de données 10 et le disque système 14. Le fichier d'identité Id₁ comprend quant à lui un identificateur d'activité A₁, un identificateur correspondant au logiciel d'application 20, un identificateur correspondant au système d'exploitation 24, et un attribut de sauvegarde de la partie basse du chemin d'accès égal à L₂ ou égal à un identificateur de la partie basse L₂. Le domaine D₂ comprend un fichier de définition d'un périmètre P₂ et un fichier d'identité Id₂. Le périmètre P₂ défini dans cet exemple comprend la cellule 34, le disque de données 12 et le disque système 16. Le fichier d'identité Id₂ contient quant à lui un identificateur d'activité A₂, un identificateur correspondant au logiciel d'application 22, un identificateur correspond au système d'exploitation 26, et un attribut de sauvegarde de la partie basse du chemin d'accès égal à L₄ ou égal à un identificateur de la partie basse L₄.

Les périmètres P₁ et P₂ sont représentés schématiquement en lignes pointillées sur la figure 1.

Dans le cas où un périmètre, tel que le périmètre P₁, comportant plusieurs cellules, est activé sur la plate-forme 4, une seule des cellules est une cellule maître, tandis que les autres cellules du même périmètre sont des cellules esclaves. Ainsi, cet ensemble de cellules se comporte en réalité comme une seule unité de traitement multiprocesseur. Dans une telle situation, seul le chemin d'accès enregistré dans la cellule maître est utilisé pour lancer le système d'exploitation apte à gérer les ressources informatiques matérielles de ce périmètre. La cellule maître est par exemple automatiquement déterminée en choisissant la cellule ayant le plus petit numéro d'ordre dans le périmètre. Ainsi, dans la situation représentée sur la figure 2, c'est-à-dire lorsque les périmètres P₁ et P₂ sont configurés sur la plate-forme 4, le chemin d'accès complet enregistré dans la mémoire de travail du périmètre P₁ est H₁/L₂, tandis que celui enregistré dans la mémoire de travail du périmètre P₂ est H₃/L₄.

Le calculateur 62 est équipé d'un logiciel d'administration 76. Ce logiciel est destiné, sous la commande d'un opérateur, à définir et à activer de nouveaux domaines logiques dans le système 2. Il est également apte à sauvegarder automatiquement, dans la liste 70 de chemins d'accès, les parties basses de chemins d'accès à de nouveaux disques systèmes installés à partir d'un périmètre activé sur la plate-forme 4. Pour cela, il comporte des moyens 78 de définition d'un nouveau domaine, un module 80 de sauvegarde de la partie basse des chemins d'accès dans la liste 70, et un module 82 d'activation d'un domaine sur la plate-forme 4.

Les moyens 78 sont propres à définir de nouveaux domaines sous la commande de l'opérateur. A cet effet, ils comportent notamment un module d'association 84 d'un fichier de définition d'un périmètre et d'un fichier d'identité d'une activité. Ce module d'association 84 est, par exemple, associé ici à un module 86 de création d'un fichier de définition d'un périmètre et à un module 88 de création d'un fichier d'identité. Le module 86 de création d'un fichier de définition d'un périmètre est apte à définir, sous la commande de l'opérateur, les ressources informatiques matérielles faisant partie d'un nouveau périmètre. Le module 88 de création d'un fichier d'identité est propre à définir une activité, c'est-à-dire l'ensemble des moyens logiciels à mettre en oeuvre pour réaliser cette activité. Ce module 88 est donc propre à enregistrer, sous la commande de l'opérateur, l'identificateur d'activité, l'identificateur du système d'exploitation et le ou les identificateurs des logiciels d'application. Ce module 88 est également apte à sélectionner, dans la liste 70 de chemins d'accès, la partie basse correspondant au disque système contenant le système d'exploitation de l'activité et à l'enregistrer dans l'attribut de sauvegarde prévu à cet effet dans le fichier d'identité. Le module 78 comporte également un module 90 d'enregistrement, dans la liste 72, du nouveau domaine défini à l'aide des modules 84, 86 et 88.

Le module 80 de sauvegarde est apte à enregistrer automatiquement la partie basse d'un chemin d'accès à un nouveau disque système lors de l'installation de celui-ci à partir d'un périmètre activé. A cet effet, il comporte un sous-module 94 de réception du nouveau chemin d'accès à un nouveau disque système transmis par le programme BIOS du périmètre utilisé pour réaliser l'installation du nouveau disque système. Le module 80 comporte également un sous-module 96 de neutralisation des chemins d'accès reçus et un sous-module 98 d'enregistrement, dans la liste 70, des chemins d'accès neutralisés.

Le sous-module 96 est apte à remplacer la partie haute d'un chemin d'accès reçu par l'intermédiaire du sous-module 94 par un caractère générique. Ce caractère générique est ici, à titre d'exemple, le caractère : "$". A cet effet, ce sous-module 96 de neutralisation est propre à reconnaître la structure particulière de la partie haute du chemin d'accès et à la remplacer par le caractère "$".

Le module 82 est destiné à activer, sur la plate-forme 4, les domaines logiques enregistrés dans la liste 72. Ce module 82 d'activation comporte en particulier un sous-module 102 d'actualisation du chemin d'accès, dans la mémoire de travail 48 de la cellule maître du périmètre défini dans le domaine logique à activer. Ce sous-module d'actualisation est apte à remplacer la partie basse du chemin d'accès actuellement enregistrée dans la mémoire de travail locale du périmètre par celle référencée dans le fichier d'identité du domaine à activer.

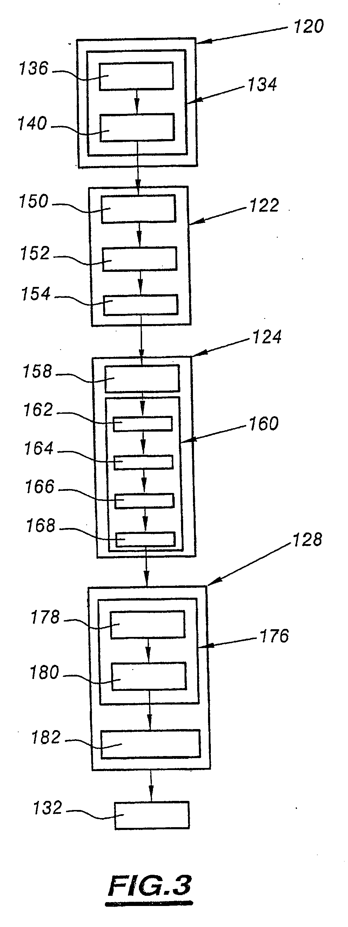

Le fonctionnement du système 2 va maintenant être décrit à l'aide de la figure 3 et dans le cas particulier où les périmètres actuellement actifs sur la plate-forme 4 sont les périmètres P₁ et P₂.

Le procédé de la figure 3 comporte cinq étapes principales 120, 122, 124, 128 et 132 successives.

L'étape 120 est une étape de définition d'un nouveau périmètre P₃ sur la plate-forme 4 pour exécuter l'activité d'exploitation A₁. Cette étape 120 comporte principalement une étape 134 de création, par l'opérateur de l'outil d'administration 60, d'un nouveau domaine logique D₃ dans la liste 72 de domaines logiques. Elle comporte deux sous-étapes 136 et 140 successives.

Lors de la sous-étape 136, l'opérateur crée, à l'aide du module 86, un fichier de définition du nouveau périmètre P₃. A titre d'exemple, le nouveau périmètre P₃ défini lors de cette sous-étape comporte la cellule 34, le disque de données 10 et le disque système 14.

Lors de la sous-étape 140, le nouveau domaine logique D₃ est constitué en associant, à l'aide du module 84, le fichier de définition du périmètre P₃ défini lors de la sous-étape précédente 136 et le fichier d'identité Id₁ déjà défini pour l'activité A₁ dans le domaine D₁ de la liste 72. Finalement, à la fin de la sous-étape 140, le nouveau domaine D₃ est enregistré dans la liste 72 de domaines logiques à l'aide du module 90.

A ce stade, avant d'exécuter l'étape 122, les périmètres P₁ et P₂ sont supposés inactifs ou sont désactivés par l'opérateur du système 2, de sorte que les ressources informatiques matérielles correspondant au périmètre P₃ sont disponibles sur la plate-forme 4.

Lors de l'étape 122, l'opérateur active, à l'aide du module 82, le domaine D₃ enregistré dans la liste 72. Lors de cette étape 122, le module 82 d'activation d'un périmètre commence par initialiser et configurer les ressources informatiques correspondant au périmètre P₃ telles qu'elles sont définies par le fichier de définition du périmètre P₃ du domaine D₃. Ensuite, il restore le contexte d'exécution de l'activité d'exploitation A₁ à partir des informations enregistrées dans les attributs de sauvegarde du fichier d'identité Id₁ du domaine D₃. En particulier, avant l'exécution du programme BIOS de la cellule 34, cette étape comporte une opération 150 d'actualisation du chemin d'accès de la mémoire de travail locale de la cellule 34. Cette opération 150 d'actualisation consiste à remplacer la partie basse du chemin d'accès actuellement contenue dans la mémoire de travail locale de la cellule 34 par la partie basse enregistrée dans le fichier d'identité Id₁ du domaine D₃. Ainsi, dans l'exemple décrit ici, cette opération consiste à remplacer le chemin d'accès H₃/L₄ précédemment utilisé lorsque le périmètre P₂ était actif par le chemin d'accès actualisé H₃/L₂.

Ensuite, lors d'une opération 152, le module d'activation 82 lance le programme BIOS de la cellule 34. Ce programme BIOS, à son tour, lance l'exécution du système d'exploitation 24 contenu dans le disque système 14 correspondant au chemin d'accès H₃/L₂.

Finalement, lors d'une opération 154, le logiciel d'application 20 est lancé, soit automatiquement, soit par l'opérateur, sur le nouveau périmètre P₃ géré par le système d'exploitation 24.

Ainsi, grâce à la mise à jour des mémoires de travail du nouveau périmètre avant l'exécution du programme BIOS, il est possible de transférer une même activité sur un nouveau périmètre de ressources informatiques sans pour autant qu'une réinstallation du disque système associé à cette activité, à partir de ce nouveau périmètre, ne soit nécessaire.

A ce stade, le disque système 16 est supposé, à titre purement illustratif, avoir été désinstallé, de sorte que la partie basse L₄ ne figure plus dans la liste 70 et qu'il est nécessaire de le réinstaller.

L'étape 124 est une étape d'installation d'un nouveau disque système à partir d'un périmètre actuellement activé. Cette étape 124 sera décrite ici dans le cas particulier où le périmètre activé sur la plate-forme 4 est le périmètre P₃. On suppose ici que le nouveau disque système à installer est le disque système 16 de la figure 1. L'étape 124 comporte une première sous-étape 158 de mise à jour du chemin d'accès complet de la mémoire de travail non volatile de la cellule 34. Cette sous-étape 158 est réalisée par le système d'exploitation 24 qui contrôle le programme BIOS pour que celui-ci enregistre le nouveau chemin d'accès vers le disque système 16 dans la mémoire de travail locale de la cellule 34. Ce nouveau chemin d'accès correspond ici au chemin H₃/L₄. La sous-étape 158 est suivie d'une sous-étape 160 de sauvegarde de la partie basse du nouveau chemin d'accès dans la liste 70. La sous-étape 160 comporte quatre opérations 162, 164, 166 et 168 successives. L'opération 162 est une opération de transmission du nouveau chemin d'accès à l'outil d'administration 60. Cette opération 162 est exécutée par le programme BIOS, qui transmet automatiquement à l'outil d'administration 60, le nouveau chemin d'accès qu'il vient d'enregistrer dans la mémoire de travail de la cellule 34. Le chemin d'accès transmis par le programme BIOS est le chemin d'accès complet, c'est-à-dire comportant la partie haute et la partie basse du chemin d'accès. Lors de l'opération 164 réalisée par le sous-module 94, l'outil d'administration 60 reçoit ce chemin d'accès et le transmet au sous-module 96 de neutralisation. Ensuite, lors de l'opération 166 de neutralisation, le sous-module 96 de neutralisation du module de sauvegarde 80 remplace la partie haute du chemin d'accès reçue, c'est-à-dire ici H₃, par le caractère générique "$".

Finalement, lors de l'opération 168 d'enregistrement, le chemin d'accès neutralisé lors de l'opération 166 est enregistré dans la liste 70 de chemins d'accès par le sous-module 98. Dans cet exemple, le chemin d'accès neutralisé enregistré est donc : $/L₄. Ainsi, seule l'information pertinente et réutilisable pour la définition d'autres domaines logiques, c'est-à-dire la partie basse du chemin d'accès, est mémorisée. En effet, il n'est pas utile de mémoriser le chemin d'accès complet, car la partie haute du chemin d'accès dépend de la cellule qui sera utilisée pour accéder au disque système.

Lors d'une étape 128, l'opérateur définit une nouvelle activité A₃ réalisée à l'aide du système d'exploitation du disque système 16 qui vient d'être installé lors de l'étape 124 et à l'aide du logiciel d'application 20. Cette étape 128 débute par une sous-étape 176. Lors de cette sous-étape 176, l'opérateur crée, à l'aide du module 88, un nouveau fichier d'identité, noté Id₃, correspondant à la nouvelle activité A₃. Cette sous-étape 176 comporte essentiellement une opération 178 de définition de l'activité d'exploitation A₃ à exécuter et une opération 180 d'association, à cette activité A₃, de la partie basse correspondant au disque système à utiliser.

L'opération 178 consiste par exemple à saisir l'identificateur d'activité A₃ et les identificateurs du logiciel d'application et du système d'exploitation à exécuter. Ici, l'identificateur du logiciel d'application saisi correspond au logiciel 20 et l'identificateur du système d'exploitation au système d'exploitation 26. L'opération 180 consiste à sélectionner, dans la liste 70, à l'aide du module 88, la partie basse du chemin d'accès au disque système 16, c'est-à-dire ici la partie basse L₄. Lors de l'opération 180, la partie basse sélectionnée est enregistrée dans l'attribut de sauvegarde correspondant du fichier Id₃ défini lors de l'opération 178.

La nouvelle activité A₃ est destinée à être exécutée sur le périmètre P₃. Ainsi, l'étape 128 comporte également une deuxième sous-étape 182 consistant à créer un nouveau domaine D₄ associant le périmètre P₃ et le nouveau fichier d'identité Id₃. Cette sous-étape 182 est similaire à la sous-étape 140 et ne sera donc pas décrite en détail.

Une fois que les ressources informatiques nécessaires au périmètre P₃ ont été libérées, une étape 132 d'activation du domaine D₄ est exécutée. Cette étape 132 est similaire à l'étape 122 et ne sera donc pas décrite ici plus en détail.

Ainsi, puisque cette nouvelle activité A₃ est associée à la partie basse du chemin d'accès à son disque système, et que le système 2 est adapté pour mettre à jour les mémoires locales des périmètres avant leur activation, il est possible ultérieurement de transférer cette nouvelle activité A₃ sur d'autres périmètres, sans que cela nécessite, de la part de l'opérateur, une nouvelle réinstallation du disque système. Dans le mode de réalisation particulier décrit ici, il suffit pour cela d'activer, sur la plate-forme 4, un domaine logique associant la définition du nouveau périmètre au fichier d'identité Id₃.

A l'aide du système 2 décrit ci-dessus, l'opérateur peut donc facilement transférer une activité d'exploitation d'un périmètre vers un périmètre différent. Ceci est particulièrement utile par exemple lorsqu'une activité d'exploitation requiert temporairement une puissance de traitement supérieure à celle disponible dans le périmètre sur lequel elle est actuellement exécutée.

De plus, grâce à la sauvegarde du contexte d'exécution de l'activité dans un fichier d'identité et à la restauration de ce contexte d'exécution avant le lancement de cette activité sur un nouveau périmètre, le système d'exploitation et les logiciels d'application utilisés pour former cette activité n'ont pas besoin d'être spécialement adaptés pour être exécutés dans un système reconfigurable tel que le système 2. Le système d'exploitation et les logiciels d'application peuvent donc être classiques.

Le système 2 a été décrit ici dans le cas particulier où les disques de données et les disques système sont des entités physiques indépendantes l'une de l'autre. Toutefois, dans une variante, le disque système peut également contenir un ou plusieurs logiciels d'application, ainsi que leurs données. Dans cette situation, le disque système correspond à une portion d'un espace de stockage d'informations plus vaste.

Le système 2 a également été décrit ici dans le cas particulier où les chemins d'accès sont neutralisés avant d'être enregistrés dans la liste 70 de chemins d'accès. Cependant, en variante, les chemins d'accès complets, c'est-à-dire composés de la partie haute et de la partie basse, sont enregistrés dans la liste 70 de chemins d'accès. Dans cette variante, l'étape de neutralisation du chemin d'accès est effectuée lors de l'opération d'actualisation de la mémoire de travail locale contenue dans le nouveau périmètre à activer.

Dans une autre variante, le programme BIOS transmet uniquement la partie basse du chemin d'accès à l'outil d'administration. Ainsi, dans cette variante, l'étape de neutralisation du chemin d'accès complet est effectuée non pas par l'outil d'administration lui-même, mais directement par le programme BIOS par exemple.

Le système 2 a été décrit dans le cas particulier où l'installation d'un nouveau disque système doit être exécutée à partir d'un périmètre activé. En variante, l'outil d'administration comporte un module supplémentaire d'installation d'un nouveau disque système. Ce module supplémentaire, à exécuter sur l'outil d'administration 60, est apte à enregistrer directement dans la liste 70 au moins la partie basse du chemin d'accès à ce nouveau disque système. Dans cette variante, l'installation d'un nouveau disque système n'est donc pas réalisée à partir d'un périmètre activé, mais à partir de l'outil d'administration 60.

En variante, l'outil d'administration, qui a été décrit comme étant distinct de la plate-forme 4, est intégré matériellement dans cette plate-forme informatique multicellulaire.

L'opération 150 d'actualisation du chemin d'accès, avant l'exécution d'une activité sur un nouveau périmètre, a été décrite dans le cas particulier où la partie haute du chemin d'accès est préenregistrée dans la mémoire de travail locale de ce nouveau périmètre. Ainsi, dans le mode de réalisation décrit ci-dessus, seule la partie basse du chemin d'accès préenregistrée dans la mémoire de travail locale du nouveau périmètre est remplacée par celle associée à l'activité qui va être exécutée sur ce nouveau périmètre. En variante ou lorsqu'il n'existe pas de partie haute préenregistrée dans la mémoire de travail, la partie haute du chemin d'accès du nouveau périmètre est préenregistrée dans la mémoire 64 associée à l'outil d'administration, par exemple dans le fichier de définition d'un nouveau périmètre. Ainsi, dans cette variante, le sous-module d'actualisation du chemin d'accès est adapté pour créer le nouveau chemin d'accès complet en combinant la partie haute contenue dans le fichier de définition du nouveau périmètre et la partie basse associée à l'activité qui va être lancée sur ce nouveau périmètre. Cette variante présente l'avantage de ne pas dépendre du contenu de la mémoire de travail locale enregistrée lors de configurations précédentes de la plate-forme multicellulaire. En effet, dans cette variante, le chemin d'accès complet est actualisé lors de chaque lancement d'une activité sur un nouveau périmètre.

## Revendications

1. Procédé de mise à jour automatique d'un chemin d'accès au disque système d'un périmètre matériel de ressources informatiques lors du lancement d'une activité d'exploitation sur ce périmètre, le périmètre étant configuré dans un système configurable de ressources informatiques adapté pour :
- configurer plusieurs périmètres destinés à être activés simultanément ou successivement, chaque périmètre comportant :
- une unité centrale de traitement, formée à partir d'une ou plusieurs cellules de calcul (30, 32, 34, 36) d'une plate-forme informatique multicellulaire (4),
- des ressources (8) communes à l'ensemble de la plate-forme (4) dont au moins un disque système (14, 16) raccordé à l'unité centrale de traitement par l'intermédiaire de moyens (6) adressables d'interconnexion de la plate-forme au disque système (14, 16), et
- une mémoire de travail (48) contenant le chemin d'accès utilisé lors de l'activation du périmètre pour lancer un système d'exploitation (24, 26) contenu dans le disque système (14, 16), ce chemin d'accès se composant d'une partie haute définissant les éléments matériels à parcourir pour atteindre les moyens d'interconnexion (6) à partir de l'unité de traitement, cette partie haute étant uniquement fonction de l'unité de traitement utilisée dans ce périmètre, et d'une partie basse définissant les éléments matériels à parcourir pour atteindre le disque système (14, 16) à partir des moyens d'interconnexion (6), cette partie basse étant uniquement fonction de la position du disque système (14, 16) par rapport aux moyens d'interconnexion (6),
- définir une activité d'exploitation susceptible d'être lancée successivement sur plusieurs périmètres différents, l'activité regroupant des moyens logiciels à mettre en oeuvre pour réaliser cette activité, ces moyens logiciels comportant au moins un système d'exploitation apte à gérer les ressources matérielles du périmètre sur lequel l'activité doit être lancée,
**caractérisé en ce que** le procédé comporte :
- lors de l'installation d'un nouveau disque système, une étape (160) de sauvegarde de la partie basse du chemin d'accès au nouveau disque système dans une liste (70) de chemins d'accès, enregistrée dans une mémoire (64),
- à l'occasion de la définition de l'activité d'exploitation, une étape (180) d'association à cette activité de la partie basse, enregistrée dans la liste (70) de chemins d'accès, correspondant au disque système comportant le système d'exploitation lancé lors de cette activité,
- à l'occasion du lancement de l'activité sur un périmètre, une étape (150) d'actualisation automatique du chemin d'accès contenu dans la mémoire de travail (48) de ce périmètre en combinant la partie haute du chemin d'accès de ce périmètre avec la partie basse du chemin d'accès associée à cette activité lors de sa définition.

2. Procédé selon la revendication 1, **caractérisé en ce que** l'étape (180) d'association consiste à enregistrer, dans la mémoire (64), un fichier d'identité contenant à la fois un identificateur de l'activité d'exploitation et un identificateur de la partie basse du chemin d'accès enregistrée dans la liste (70), cette partie basse correspondant au disque système comportant le système d'exploitation lancé lors de l'exécution de cette activité.

3. Procédé selon la revendication 1 ou 2, **caractérisé en ce que** l'étape de sauvegarde (160) comporte une opération (166) de neutralisation du chemin d'accès à enregistrer dans la liste (70) de chemins d'accès, cette opération consistant à supprimer la partie haute du chemin d'accès complet au nouveau disque et à n'enregistrer dans la liste (70) de chemins d'accès que le chemin d'accès au nouveau disque système sans sa partie haute.

4. Procédé selon l'une quelconque des revendications précédentes, **caractérisé en ce que**, lorsque l'installation du nouveau disque système est effectuée à partir d'un périmètre comportant un programme d'amorçage (BIOS) apte à enregistrer dans la mémoire de travail (48) de ce périmètre le chemin d'accès au nouveau disque système, l'étape de sauvegarde (160) comporte :
- une opération (162) de transmission à un outil d'administration (60) associé à la mémoire (64), de la partie basse du chemin d'accès au nouveau disque système, cette opération étant réalisée par le programme d'amorçage, et
- une opération (168) d'enregistrement dans la liste (70) de chemins d'accès de la partie basse transmise par le programme d'amorçage, cette opération étant réalisée par l'outil d'administration (60).

5. Procédé selon les revendications 3 et 4 prises ensemble, **caractérisé en ce que**, lors de l'opération (162) de transmission de la partie basse du chemin d'accès, le programme d'amorçage transmet à l'outil d'administration (60) le chemin d'accès complet au nouveau disque système, et **en ce que** l'opération (166) de neutralisation du chemin d'accès et l'opération (168) d'enregistrement dans la liste de chemins d'accès sont successivement réalisées par l'outil d'administration.

6. Procédé selon l'une quelconque des revendications précédentes, **caractérisé en ce que**, lorsqu'une activité est lancée sur un périmètre comportant un programme d'amorçage (BIOS) apte à lancer le système d'exploitation, le procédé comporte, après l'étape (150) d'actualisation du nouveau périmètre, une étape (152) de lancement du système d'exploitation correspondant au chemin d'accès actualisé, réalisée par le programme d'amorçage (BIOS).

7. Système (2) de mise à jour automatique d'un chemin d'accès au disque système, comportant :
- plusieurs périmètres matériels de ressources informatiques destinés à être activés simultanément ou successivement, chaque périmètre comportant :
- une unité centrale de traitement, formée à partir d'une ou plusieurs cellules de calcul (30, 32, 34, 36) d'une plate-forme informatique multicellulaire (4),
- des ressources (8) communes à l'ensemble de la plate-forme (4) dont au moins un disque système (14, 16) raccordé à l'unité centrale de traitement par l'intermédiaire de moyens (6) adressables d'interconnexion de la plate-forme au disque système (14, 16), et
- une mémoire de travail (48) contenant le chemin d'accès utilisé lors de l'activation du périmètre pour lancer un système d'exploitation (24, 26) contenu dans le disque système (14, 16), ce chemin d'accès se composant d'une partie haute définissant les éléments matériels à parcourir pour atteindre les moyens d'interconnexion (6) à partir de l'unité de traitement, cette partie haute étant uniquement fonction de l'unité de traitement utilisée dans ce périmètre, et d'une partie basse définissant les éléments matériels à parcourir pour atteindre le disque système (14, 16) à partir des moyens d'interconnexion (6), cette partie basse étant uniquement fonction de la position du disque système (14, 16) par rapport aux moyens d'interconnexion (6),
- un outil d'administration apte à définir une activité d'exploitation susceptible d'être lancée successivement sur plusieurs périmètres différents, l'activité regroupant des moyens logiciels à mettre en oeuvre pour réaliser cette activité, ces moyens logiciels comportant au moins un système d'exploitation apte à gérer les ressources matérielles du périmètre sur lequel l'activité doit être lancée,
**caractérisé en ce qu'**il comporte :
- un module (80) de sauvegarde, dans une mémoire (64), d'une liste (70) de chemins d'accès contenant les parties basses des chemins d'accès aux disques système (14, 16),
- un module (88) d'association à l'activité, de la partie basse enregistrée dans la liste (70) de chemins d'accès correspondant au disque système comportant le système d'exploitation lancé lors de cette activité,
- un module (102) d'actualisation automatique du chemin d'accès contenu dans la mémoire de travail d'un périmètre en combinant la partie haute du chemin d'accès de ce périmètre avec la partie basse du chemin d'accès associée à l'activité à l'aide du module (88) d'association.

8. Système selon la revendication 7, **caractérisé en ce que** le module de sauvegarde (80) comporte un sous-module (96) de neutralisation du chemin d'accès à enregistrer dans la liste (70) de chemins d'accès, ce module de sauvegarde (80) étant apte à supprimer la partie haute du chemin d'accès complet à un disque système à enregistrer dans la liste (70) de chemins d'accès.

9. Système selon la revendication 7 ou 8, **caractérisé en ce que** chaque périmètre comporte un programme d'amorçage (BIOS) apte à enregistrer, dans la mémoire de travail (48) du périmètre, le chemin d'accès à un nouveau disque système, et **en ce que** ce programme d'amorçage est adapté pour transmettre automatiquement, au module de sauvegarde (80), au moins la partie basse du chemin d'accès complet au nouveau disque système.

10. Mémoire (64) destinée à être utilisée dans un système configurable selon l'une quelconque des revendications 7 à 9, **caractérisé en ce qu'**elle comporte un fichier d'identité associant un identificateur d'une activité d'exploitation et un identificateur de la partie basse d'un chemin d'accès correspondant au disque système comportant le système d'exploitation lancé lors de l'exécution de cette activité.

## Claims

1. Method for automatically updating an access path to the system disk of a hardware structure of data-processing resources when an operating activity is launched on this structure, the structure being configured in a configurable system of data-processing resources adapted for:
- configuring several structures intended to be activated simultaneously or successively, each structure including:
- a central processing unit, formed from one or more computing cells (30, 32, 34, 36) of a multicellular data-processing platform (4),
- resources (8) common to the whole platform (4), including at least one system disk (14, 16) connected to the central processing unit via addressable means (6) for interconnecting the platform to the system disk (14, 16), and
- a working memory (48) containing the access path used when the structure is activated in order to launch an operating system (24, 26) contained in the system disk (14, 16), this access path being composed of an upper part defining the hardware elements to be passed through in order to reach the interconnection means (6) starting from the processing unit, this upper part being solely a function of the processing unit used in this structure, and a lower part defining the hardware elements to be passed through in order to reach the system disk (14, 16) starting from the interconnection means (6), this lower part being solely a function of the position of the system disk (14, 16) relative to the interconnection means (6),
- defining an operating activity capable of being launched successively on several different structures, the activity grouping together software means to be implemented in order to perform this activity, these software means including at least one operating system capable of managing the hardware resources of the structure on which the activity has to be launched,
**characterised in that** the method includes:
- on installation of a new system disk, a step (160) of saving the lower part of the access path to the new system disk in a list (70) of access paths, recorded in a memory (64),
- at the time of defining the operating activity, a step (180) for associating this activity with the lower part, recorded in the list (70) of access paths, corresponding to the system disk including the operating system launched at the time of this activity,
- at the time of launching the activity on a structure, a step (150) of automatically updating the access path contained in the working memory (48) of this structure, combining the upper part of the access path of this structure with the lower part of the access path associated with this activity when it is defined.

2. Method according to Claim 1, **characterised in that** the association step (180) consists in recording, in the memory (64), an identity file containing both an identifier of the operating activity and an identifier of the lower part of the access path recorded in the list (70), this lower part corresponding to the system disk including the operating system launched during the execution of this activity.

3. Method according to Claim 1 or 2, **characterised in that** the saving step (160) includes an operation (166) of neutralising the access path to be recorded in the list (70) of access paths, this operation consisting in removing the upper part of the complete access path to the new disk and only recording, in the list (70) of access paths, the access path to the new system disk without its upper part.

4. Method according to any one of the preceding claims, **characterised in that**, when the new system disk is installed from a structure including a bootstrap program (BIOS) capable of recording in the working memory (48) of this structure the access path to the new system disk, the saving step (160) includes:
- an operation (162) of transmitting to an administration tool (60) associated with the memory (64), the lower part of the access path to the new system disk, this operation being performed by the bootstrap program, and
- an operation (168) of recording in the list (70) of access paths of the lower part transmitted by the bootstrap program, this operation being performed by the administration tool (60).

5. Method according to Claims 3 and 4 taken together, **characterised in that**, at the time of the operation (162) for transmitting the lower part of the access path, the bootstrap program transmits to the administration tool (60) the complete access path to the new system disk, and **in that** the operation (166) of neutralising the access path and the operation (168) of recording in the list of access paths are performed in succession by the administration tool.

6. Method according to any one of the preceding claims, **characterised in that**, when an activity is launched on a structure including a bootstrap program (BIOS) capable of launching the operating system, the method includes, after the step (150) of updating the new structure, a step (152) of launching the operating system corresponding to the updated access path, performed by the bootstrap program (BIOS).

7. System (2) for automatically updating an access path to the system disk, including:
- several hardware structures of data-processing resources intended to be activated simultaneously or successively, each structure including:
- a central processing unit, formed from one or more computing cells (30, 32, 34, 36) of a multicellular data-processing platform (4),
- resources (8) common to the whole platform (4), including at least one system disk (14, 16) connected to the central processing unit via addressable means (6) for interconnecting the platform to the system disk (14, 16), and
- a working memory (48) containing the access path used on activation of the structure in order to launch an operating system (24, 26) contained in the system disk (14, 16), this access path being composed of an upper part defining the hardware elements to be passed through in order to reach the interconnection means (6) starting from the processing unit, this upper part being solely a function of the processing unit used in this structure, and of a lower part defining the hardware elements to be passed through in order to reach the system disk (14, 16) starting from the interconnection means (6), this lower part being solely a function of the position of the system disk (14, 16) relative to the interconnection means (6),
- an administration tool capable of defining an operating activity that can be launched successively on several different structures, the activity grouping together software means to be implemented in order to carry out this activity, these software means including at least one operating system capable of managing the hardware resources of the structure on which the activity has to be launched,
**characterised in that** it includes
- a module (80) for saving, in a memory (64), a list (70) of access paths containing the lower parts of the access paths to the system disks (14, 16),
- a module (88) for associating with the activity the lower part recorded in the list (70) of access paths corresponding to the system disk including the operating system launched at the time of this activity,
- a module (102) for automatically updating the access path contained in the working memory of a structure by combining the upper part of the access path of this structure with the lower part of the access path associated with the activity using the association module (88).

8. System according to Claim 7, **characterised in that** the save module (80) includes a submodule (96) for neutralising the access path to be recorded in the list (70) of access paths, this save module (80) being capable of removing the upper part of the complete access path to a system disk to be recorded in the list (70) of access paths.

9. System according to Claim 7 or 8, **characterised in that** each structure includes a bootstrap program (BIOS) capable of recording, in the working memory (48) of the structure, the access path to a new system disk, and **in that** this bootstrap program is adapted for automatically transmitting to the save module (80), at least the lower part of the complete access path to the new system disk.

10. Memory (64) intended to be used in a configurable system according to any one of Claims 7 to 9, **characterised in that** it includes an identity file associating an identifier of an operating activity and an identifier of the lower part of an access path corresponding to the system disk including the operating system launched when this activity is executed.

## Patentansprüche

1. Verfahren zum automatischen Aktualisieren eines Zugriffswegs zu einer Systemplatte eines Hardware-Bereichs von Datenverarbeitungs-Betriebsmittelr beim Starten einer Betriebsaktivität in diesem Bereich, wobei der Bereich in einem konfigurierbaren System von Datenverarbeitungs-Betriebsmitteln konfiguriert ist, das ausgelegt ist, um:
- mehrere Bereiche zu konfigurieren, die dazu bestimmt sind, gleichzeitig oder nacheinander aktiviert zu werden, wobei jeder Bereich umfasst:
- eine Zentraleinheit, die aus einer oder aus mehreren Rechenzellen (30, 32, 34, 36) einer Mehrfachzellen-Datenverarbeitungsplattform (4) gebildet ist,
- Betriebsmittel (8), die der gesamten Plattform (4) gemeinsam sind, wovon wenigstens eine Systemplatte (14, 16) mit der Zentraleinheit über adressierbare Mittel (6) zum Verbinden der Plattform mit der Systemplatte (14, 16) verbunden ist, und
- einen Arbeitsspeicher (48), der den bei der Aktivierung des Bereichs zum Starten eines in der Systemplatte (14, 16) enthaltenen Betriebssystems (24, 26) verwendeten Zugangsweg enthält, wobei dieser Zugangsweg aus einem oberen Teil, der die Hardware-Elemente definiert, die zu durchlaufen sind, um ausgehend von der Verarbeitungseinheit die Verbindungsmittel (6) zu erreichen, wobei dieser obere Teil ausschließlich von der in diesem Bereich verwendeten Verarbeitungseinheit abhängt, und aus einem unteren Teil, der die Hardware-Elemente definiert, die zu durchlaufen sind, um die Systemplatte (14, 16) ausgehend von den Verbindungsmitteln (6) zu erreichen, wobei dieser untere Teil ausschließlich von der Position der Systemplattes (14, 16) in Bezug auf die Verbindungsmittel (6) abhängt, zusammengesetzt ist,
- eine Betriebsaktivität zu definieren, die nacheinander in den mehreren verschiedenen Bereichen gestartet werden kann, wobei die Aktivität die Software-Mittel, die ausgeführt werden müssen, um diese Aktivität zu verwirklichen, umgruppiert, wobei diese Software-Mittel wenigstens ein Betriebssystem enthalten, das die Hardware-Betriebsmittel des Bereichs, in dem die Aktivität gestartet werden soll, steuern kann,
**dadurch gekennzeichnet, dass** das Verfahren umfasst:
- bei der Installation einer neuen Systemplatte einen Schritt (160) des Sicherns des unteren Teils des Zugangswegs zu der neuen Systemplatte in einer Liste (70) von Zugangswegen, die in einen Speicher (64) eingetragen ist,
- anlässlich der Definition der Betriebsaktivität einen Schritt (180) des Zuordnens des unteren Teils, der in die Liste (70) von Zugangswegen eingetragen ist und der Systemplatte entspricht, die das Betriebssystem enthält, das bei dieser Aktivität gestartet wird, zu dieser Aktivität,
- anlässlich des Startens der Aktivität in dem Bereich einen Schritt (150) des automatischen Aktualisierens des in dem Arbeitsspeicher (48) dieses Bereichs enthaltenen Zugangswegs durch Kombinieren des oberen Teils des Zugangswegs dieses Bereichs mit dem unteren Teil des Zugangswegs, der dieser Aktivität bei ihrer Definition zugeordnet wird.

2. Verfahren nach Anspruch 1, **dadurch gekennzeichnet, dass** der Zuordnungsschritt (180) darin besteht, in den Speicher (64) eine Identitätsdatei einzutragen, die sowohl einen Identifizierer der Betriebsaktivität als auch einen Identifizierer des in die Liste (70) eingetragenen unteren Teils des Zugangswegs enthält, wobei dieser untere Teil der Systemplatte entspricht, die das Betriebssystem enthält, das bei der Ausführung dieser Aktivität gestartet wird.

3. Verfahren nach Anspruch 1 oder 2, **dadurch gekennzeichnet, dass** der Sicherungsschritt (160) eine Operation (166) des Entfernens des in die Liste (70) von Zugangswegen einzutragenden Zugangswegs umfasst, wobei diese Operation darin besteht, den oberen Teil des vollständigen Zugangswegs zu der neuen Platte zu entfernen und in die Liste (70) von Zugangswegen nur den Zugangsweg zu der neuen Systemplatte ohne seinen oberen Teil einzutragen.

4. Verfahren nach einem der vorhergehenden Ansprüche, **dadurch gekennzeichnet, dass** dann, wenn die Installation der neuen Systemplatte ausgehend von einem Bereich erfolgt, der ein Hochfahrprogramm (BIOS) enthält, das in den Arbeitsspeicher (48) dieses Bereichs den Zugangsweg zu der neuen Systemplatte eintragen kann, der Sicherungsschritt (160) umfasst:
- eine Operation (162) zum Übertragen des unteren Teils des Zugangswegs zu der neuen Systemplatte an ein dem Speicher (64) zugeordnetes Management-Werkzeug (60), wobei diese Operation durch das Hochfahrprogramm verwirklicht wird, und
- eine Operation (168) des Eintragens des von dem Hochfahrprogramm übertragenen unteren Teils in die Liste (70) von Zugangswegen, wobei diese Operation durch das Management-Werkzeug (60) ausgeführt wird.

5. Verfahren nach den Ansprüchen 3 und 4 zusammengenommen, **dadurch gekennzeichnet, dass** in der Operation (162) des Übertragens des unteren Teils des Zugangswegs das Hochfahrprogramm an das Management-Werkzeug (60) den vollständigen Zugangsweg zu der neuen Systemplatte überträgt und dass die Operation (166) des Entfernens des Zugangswegs und die Operation (168) des Eintragens in die Liste von Zugangswegen nacheinander durch das Management-Werkzeug verwirklicht werden.

6. Verfahren nach einem der vorhergehenden Ansprüche, **dadurch gekennzeichnet, dass** dann, wenn eine Aktivität in einem Bereich gestartet wird, der ein Hochfahrprogramm (BIOS) enthält, das das Betriebssystem starten kann, das Verfahren nach dem Schritt (150) des Aktualisierens des neuen Bereichs einen Schritt (152) zum Starten des dem aktualisierten Zugangsweg entsprechenden Betriebssystems, der durch das Hochfahrprogramm (BIOS) ausgeführt wird, umfasst.

7. System (2) zum automatischen Aktualisieren eines Zugangswegs zu einer Systemplatte, das umfasst:
- mehrere Hardware-Bereiche von Datenverarbeitungs-Betriebsmitteln, die dazu bestimmt sind, gleichzeitig oder nacheinander aktiviert zu werden, wobei jeder Bereich umfasst:
- eine Zentraleinheit, die aus einer oder aus mehreren Rechenzellen (30, 32, 34, 36) einer Mehrfachzellen-Datenverarbeitungsplattform (4) gebildet ist,
- Betriebsmittel (8), die der gesamten Plattform (4) gemeinsam sind, wovon wenigstens eine Systemplatte (14, 16) mit der Zentraleinheit über adressierbare Mittel (6) zum Verbinden der Plattform mit der Systemplatte (14, 16) verbunden ist, und
- einen Arbeitsspeicher (48), der den bei der Aktivierung des Bereichs zum Starten eines in der Systemplatte (14, 16) enthaltenen Betriebssystems (24, 26) verwendeten Zugangsweg enthält, wobei dieser Zugangsweg aus einem oberen Teil, der die Hardware-Elemente definiert, die zu durchlaufen sind, um die Verbindungsmittel (6) ausgehend von der Verarbeitungseinheit zu erreichen, wobei dieser obere Teil ausschließlich von der in diesem Bereich verwendeten Verarbeitungseinheit abhängt, und aus einem unteren Teil, der die Hardware-Elemente definiert, die zu durchlaufen sind, um die Systemplatte (14, 16) ausgehend von den Verbindungsmitteln (6) zu erreichen, wobei dieser untere Teil ausschließlich von der Position der Systemplatte (14, 16) in Bezug auf die Verbindungsmittel (6) abhängt, zusammengesetzt ist,
- ein Management-Werkzeug, das eine Betriebsaktivität definieren kann, die nacheinander in mehreren verschiedenen Bereichen gestartet werden kann, wobei die Aktivität Software-Mittel, die ausgeführt werden müssen, um diese Aktivität zu verwirklichen, umgruppiert, wobei diese Software-Mittel wenigstens ein Betriebssystem enthalten, das die Hardware-Betriebsmittel des Bereichs, in dem die Aktivität gestartet werden soll, steuern kann,
**dadurch gekennzeichnet, dass** es umfasst:
- ein Modul (80) zum Sichern einer Liste (70) von Zugangswegen, die die unteren Teile der Zugangswege zu der Systemplatte (14, 16) enthält, in einem Speicher (64),
- ein Modul (88) zum Zuordnen des unteren Teils, der in die Liste (70) von Zugangswegen eingetragen ist und der Systemplatte entspricht, die das Betriebssystem enthält, das bei einer Aktivität gestartet wird, zu dieser Aktivität,
- ein Modul (102) zum automatischen Aktualisieren des in dem Arbeitsspeicher eines Bereichs enthaltenen Zugangswegs durch Kombinieren des oberen Teils des Zugangswegs dieses Bereichs mit dem unteren Teil des Zugangswegs, der der Aktivität mit Hilfe des Zuordnungsmoduls (88) zugeordnet worden ist.

8. System nach Anspruch 7, **dadurch gekennzeichnet, dass** das Sicherungsmodul (80) ein Untermodul (96) zum Entfernen des in die Liste (70) von Zugangswegen einzutragenden Zugangswegs umfasst, wobei dieses Sicherungsmodul (80) den oberen Teil des vollständigen Zugangswegs zu einer Systemplatte, der in die Liste (70) von Zugangswegen eingetragen werden soll, unterdrücken kann.

9. System nach Anspruch 7 oder 8, **dadurch gekennzeichnet, dass** jeder Bereich ein Hochfahrprogramm (BIOS) enthält, das in den Arbeitsspeicher (48) des Bereichs den Zugangsweg zu einer neuen Systemplatte eintragen kann, und dass dieses Hochfahrprogramm ausgelegt ist, um an das Sicherungsmodul (80) automatisch wenigstens den unteren Teil des vollständigen Zugangswegs zu der neuen Systemplatte zu übertragen.

10. Speicher (64), der dazu bestimmt ist, in einem konfigurierbaren System nach einem der Ansprüche 7 bis 9 verwendet zu werden, **dadurch gekennzeichnet, dass** er eine Identitätsdatei enthält, die einen Identifizierer einer Betriebsaktivität und einen Identifizierer des unteren Teils eines entsprechenden Zugangswegs der Systemplatte zuordnet, die das Betriebssystem enthält, das bei der Ausführung dieser Aktivität gestartet wird.
